# EUROPEAN PATENT SPECIFICATION

(11) **EP 2 729 715 B1**
(45) Date of publication and mention of the grant of the patent: **21.12.2016**
(21) Application number: 12743057.7
(22) Date of filing: 03.07.2012
(51) Int. Cl.: F16F 9/36, F16F 9/34, F16F 9/43, F16F 9/44, F16F 9/02, F16F 9/48, F16F 9/512, F16F 9/32

(54) **GAS SPRING WITH DAMPENING**
GASFEDER MIT DÄMPFUNG
RESSORT À GAZ AVEC AMORTISSEMENT

(30) Priority: 08.07.2011 CZ 201124576 U
(43) Date of publication of application: 14.05.2014
(73) Proprietor: Krislo, Michal, 140 00 Praha 4 (CZ); Knobloch, Rafael, 169 00 Praha 6 (CZ)
(72) Inventor: KNOBLOCH, Rafael, 169 00 Praha 6 (CZ)
(74) Representative: Svorcik, Otakar
(86) International application number: PCT/CZ2012/000060
(87) International publication number: WO 2013/007222

(56) References cited:
- EP-A2- 1 653 116
- DE-A1- 3 241 912
- US-A- 1 782 631
- US-A- 5 860 665

## Description

### Field of the invention

This invention concerns gas (pneumatic) spring with dampening, in which working gas can optionally be transferred between the working cylinder and a reservoir (or transfer cylinder) in order to provide springing and dampening of the return.

### Background of the invention

In the prior art, and the automotive industry in particular, a variety of solutions for gas springs with dampening is known.

Firstly, document GB 1 520 028 describes a lockable pneumatic (or hydro-pneumatic) spring, in which dampening occurs based on the transfer through the piston body. However, the chamber into which it is transferred is not located in the piston rod. The hollow piston rod is only used here to fill such a spring. As a result of this, such a spring not only lacks compaction but, more importantly, the working length of such a spring is significantly reduced.

Document US 3 059 916 describes an air shock absorber for a vehicle - i.e. air damper - with regulation capable of adapting its characteristics according to the load of the vehicle. The transfer chamber is located externally in this case.

Another gas spring is described in document GB 2 265 435. Here, the whole transferring is conceived solely to set the length of the spring (more specifically the rise of a suspended chair); the spring is not damped here. The solution described in document US 2008 179795 works similarly, too.

Document DE 10 2009 005381 describes a device for springing and/or dampening, provided with a chamber with an additional volume of the medium. However, this device is of a totally different construction for a very specific use.

Document WO 94/19619 introduces a shock absorber - damper, comprising a working cylinder with a piston and a piston rod. The piston and the piston rod have a through bore aligned with their axis, in which bore, rotatably placed, is a regulating pipe, and in this regulating pipe, rotatably placed, is a controlling rod. On the free end of the piston rod, the regulating pipe and the controlling rod protrude in the axial direction out of the bore of the piston rod, and they are provided with means for angular setting. Axial through openings are provided in the piston for flow through of the medium from the space above the piston to the space bellow the piston and vice versa. On the opposite side of the piston from the piston rod side, vis-à-vis with respect to the mentioned axial through openings, there are axially movable damping discs provided with axial through openings arranged in a ring coaxially with the piston axis. Two disc valves are inserted between the damping discs; these disc valves alternately abutting to one of the opposite front surfaces of the damping discs. In case of one-directional flow through of the working medium, one disc valve closes the flow through axial openings of one damping disc and the second disc valve draws away from the second damping disc and releases flow through its openings. The rotatably arranged regulating discs abut against the other front sides of the damping discs, these regulating discs having their peripheral cut outs arranged against axial through openings of the damping discs. By means of angular setting of the regulating discs, it is possible to cover openings of the axial through openings of the damping discs and to throttle the flow through of the working medium through the damping discs and piston. One regulating disc is connected with the end of the regulating pipe and the second regulating disc is connected with the end of the controlling rod. Angular setting of the regulating discs and regulating the stiffness of the shock absorber - damper - can be implemented by means of regulating means of the regulating pipe and of the controlling rod, without a necessity to disassemble the shock absorber - damper. Such a shock absorber - damper - according to WO 94/19619 is however very complex and labor intensive.

Document US 2008 211149 describes a solution having three air chambers, wherein the medium flows between two chambers (chambers 17 and 18 in this document) and the chambers together provide for a damping function, whereas the third air chamber (chamber 16) is an air cushion and has a springing function only. This solution integrates an air spring (cushion) and an air damper into a single device with relative success. It can be anticipated that thanks to the arrangement one after another (one above another) in a single body, there might be certain savings of production costs; however, as a matter of fact, these are still two independent air units, namely an air spring and an air damper, which might be separated as well, since each of them has a completely different function.

Another gas spring is described in document US 4 768 758. This gas spring does not fulfil the requirements imposed on the solution according to this invention.

Furthermore, combined air/hydraulic solutions are known. Such a solution can be found for example in high end dampers for the automotive industry produced by the company KONI, Netherlands. The company's hydraulic damper damps based on transferring the liquid medium (oil) from the space above the piston to the space bellow the piston. Hence, this solution works on a totally different basis. Moreover, such transfer systems and regulation systems are very complex.

A hydraulic damper is described for example in document US 4 899 853. Moreover, in this document, the transferring is realized externally (which means in a complicated and not sufficiently robust manner); again, it is the hydraulic liquid that is transferred.

Another solution is described in document US 2009 189363. Again, this solution is too complex from the constructional point of view, requires steel helical springs or other separate springs, and is not compact enough.

Another complicated combined oil spring is described in document DE 101 22 729. This oil spring is designed for use on a bicycle.

More combined solutions are described for example in documents DE 100 37 026, US 4 106 596 and GB 1 121 154. These solutions do not fulfil the requirement imposed on the solution according to this invention either.

A gas spring according to the preamble of Claim 1 is known from the document US 5 860 665. Another gas spring according to the state of the art is described in the document DE 32 41 912. Examples of shock absorbers known from the state of the art are described in the documents US 1 782 631 and EP 1 653 116.

### Summary of the invention

All of the above-mentioned solutions according to the state of the art are complex from the constructional point of view and involve many individual elements; in many cases they combine a gas spring (generally air spring) or a steel spring with an oil damper. Hence, these solutions are complicated to produce and their cost of production is high.

This invention aims to eliminate the deficiencies of the prior art and to provide a gas spring, simple from the constructional point of view, with dampening of the return of the piston which, by using the same simple elements, works as an air spring during compression and as an air damper during the extension. Another aim of this invention is to ensure, by using simple means, an external regulation of springing characteristics as well as damping characteristics, also continuously under working conditions of the damping spring. The invention also aims to provide a facultative function of the so-called throttle dashpot which, in case of extreme shocks (vibrations), causes an immediate closing of the transfer openings between the working cylinder and the transfer reservoir. Another aim of the invention is to provide a spring of the above-mentioned art having high reliability, simple construction, easy mounting and disassembling, a spring that can be produced in a very broad range of dimensions.

The disadvantages of the prior art are significantly eliminated and the aim of the invention is achieved by a pneumatic spring having a working cylinder and therein slidably arranged piston, whereas in order to provide springing and/or dampening optionally (i.e. in case that the dampening is requested) the working gas is transferable between the working cylinder and a reservoir, wherein the reservoir is arranged in the piston rod. The reservoir is made up by a hollow cylinder constituting the piston rod, one end of which is closed up by the piston. Such an arrangement is particularly compact (at the maximum extension), it is very simple from the constructional point of view, has low construction costs and, at the same time, is very reliable, and this at almost arbitrary dimensions.

In order to provide regulation, there is at least one transfer opening in the piston, provided with at least one gas flow control element (i.e. actually a throttle element for controlling the flow through of the working gas between the working cylinder and the reservoir), which is axially slidable with respect to the transfer opening (like a valve) and, for instance, it can be a regulation cone or a ring, or a combination of both. In this way, by using simple means, we get a compact gas spring with a gas damper integrated in a single unit.

According to the invention, the regulation is enabled from outside by means of the controlling rod for axially adjusting the gas flow control element or elements, said controlling rod being preferably provided with back stops for gas flow control element on both side, that is to say the controlling rod has an upper back stop for gas flow control element and a lower back stop for gas flow control element. In a particularly simple embodiment, the upper back stop may be constituted by a shoulder on the controlling rod and the lower back stop may be constituted for example by the so-called Seeger circlip ring provided on this controlling rod.

Preferably, on the controlling rod, there are springing means for returning of the gas flow control element, and also sealing means for providing sealing of the through going controlling rod with respect to the reservoir, which the controlling rod goes through, whereas preferably both these means are constituted by a single flexible tube, for example a silicon tube; by its springing, the tube returns the gas flow control element to its release position and thereby seals the reservoir with respect to the passage through of this controlling rod.

Such an arrangement makes it therefore possible by simple and cheap means to externally adjust both springing as well as damping characteristics at any time, even under working conditions of the gas spring according to this invention.

Preferably at least one so-called throttle dashpot may be arranged for closing the transfer opening in case of sharp stroke at least in one direction, whereas this throttle dashpot is preferably constituted by a suspended cone or by a suspended plate ("planchette"). Thanks to such a simple throttle dashpot, the gas spring according to this invention further gets the advantage of an instantaneous closing (or possibly partial closing) of the transfer openings between the working cylinder and the transfer reservoir in case of extreme shocks (vibrations); therefore we call this element the "throttle dashpot".

It is of advantage that these elements, i.e. gas flow control elements (for example regulation cones and/or rings) and possibly throttle dashpots might be arranged from one or the other side of the piston or even from both sides of the piston; this way allows providing for adjustable dampening and counter shock protection in both working directions of the piston, thereby not losing the advantage of a simple and compact construction.

Between the sealing of the piston with respect to the working cylinder and the sealing of the upper cover of the working cylinder, through which the hollow cylinder protrudes constituting the piston rod, there may be, in the space between this hollow cylinder and the mantle of the working cylinder, gas contained, constituting a flexible cushioning in the case of the piston approaching the upper cover of the working cylinder at the maximum extension of the piston. At the return of the piston, the pressure in this space increases, providing a kind of a gas silent-block preventing a sharp impact of the piston onto the upper cover, for example in the case of no dampening due to closing of the transfer opening, regardless if by the gas flow control element or by the throttle dashpot.

Preferably, a spacer may be arranged between the gas flow control element and the transfer opening for preventing the total closing of the transfer opening (by virtue of the transferred working gas or by virtue of springing means for returning of the gas flow control element) at the normal functioning of the spring. Preferably, however, this spacer of the dampening is deformable and thus allows even a total closing of the transfer opening if needed.

The individual stiffnesses of the respective flexible elements are only restricted by their mutual proportions that are unambiguously predetermined by the function of the individual elements, namely:
- on one side, the stiffness of the flexible tube must be overcome by the transferred gas under working conditions, and
- on the other side, the stiffness of the spacer of the dampening must not be overcome either by the flexible tube or by the transferred gas, but it should be possible to compress it, if needed, for example by tightening the controlling rod, see above.

The working gas in the gas spring according to this invention preferably is the air. An air gas spring is of advantage above all from the economic point of view.

The gas spring according to this invention might be filled with the working gas by any suitable way, for example by means of the filling valve in the bottom of the working cylinder.

It is also of advantage that such a gas spring can be, depending on its use, constituted either as a compression spring, where the working gas in both chambers, i.e. in the working cylinder as well as in the reservoir, is under a pressure that is higher than the pressure of the surroundings, or as an extension spring, where there is a negative pressure in both chambers.

Such a compression spring with a positive pressure working gas has a reservoir, which in the release state of the spring preferably takes up approximately 30 to 50 % of the total volume of the working gas, even more preferably approximately 40 %.

In one particular preferred embodiment of this invention an opening and/or valve is arranged in the upper sealing between the hollow cylinder and a mantle of the working cylinder for allowing filling and discharging, respectively, of the pressurized air (or gas) into/from the space above the piston between the hollow cylinder constituting the hollow piston rod and the mantle of the working cylinder in order to compress the spring and to return the spring back, respectively. It is therefore possible to introduce pressurized air (or gas) through the aforementioned opening or valve into the space above the piston around the hollow piston rod, and thereby to compress the spring. By releasing the air (or gas), the spring returns back. Such a solution is in particular suitable for different air brakes, but it can also be used as a so-called air cylinder ("pneumotor") or as a lifting jack for passenger cars and trucks etc.

The air or gas spring according to this invention is self-dampening in both directions, i.e. at compression as well as at the extension. At compression, it behaves as an air spring with dampening; at the extension, it also behaves as an air spring with dampening, whereas both these damping effects can be, as regards the magnitude of the dampening, controlled independently from each other.

### Brief description of the drawings

Embodiments of this invention will now be described in more detail based on specific exemplary embodiments shown on the drawings, where:
- Fig. 1a: illustrates one embodiment of the gas spring according to this invention, partially in a longitudinal cross section,
- Fig. 1b: illustrates another embodiment of the gas spring according to this invention in the same view as in fig. 1a,
- Fig. 2: illustrates an exemplary arrangement of the individual elements in a mode of so-called hard springing,
- Fig. 3: illustrates an exemplary arrangement of the individual elements in a mode of springing with dampening of the return of the piston,
- Fig. 4: illustrates an exemplary arrangement of the individual elements in a mode of springing without dampening of the return of the piston,
- Fig. 5: illustrates one embodiment of the throttle dashpot,
- Fig. 6: illustrates another embodiment of the throttle dashpot,
- Fig. 7: illustrates an exemplary embodiment of the spacers of the dampening.

### Detailed description of the preferred embodiments

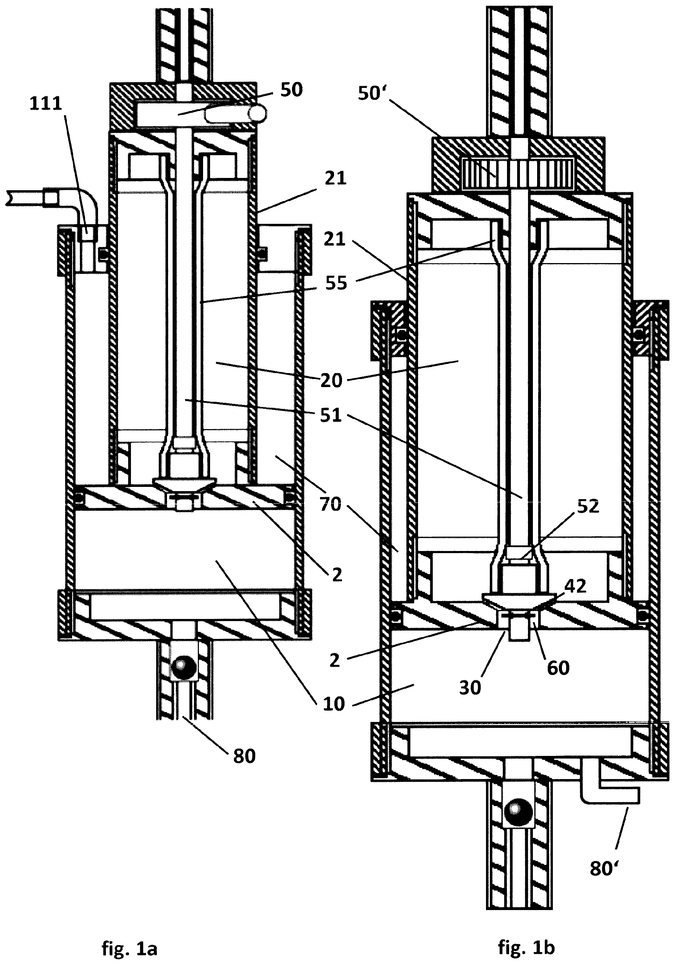

The device in fig. 1 consists of the working cylinder 10 and the reservoir 20 (or transfer cylinder) constituted by the storage cylinder 21, which constitutes the piston rod, a piston 2 being arranged on its lower end, this piston at the same time closing up the storage cylinder 21 on the lower end. On the upper end, the reservoir 20 being closed up by a cover, with which cover an attachment of the gas spring for coupling with the piece, for which a suspension has to be provided, is connected. An opposite attachment is arranged on the lower cover of the working cylinder 10, in which cover at the same time a filling valve 80 is established. Hence, the working cylinder is positioned outside of the storage cylinder and between both these cylinders a transfer opening 30 is created. All the expressions such as upper, lower, or up and down, and others, as being used throughout this text, refer only to the illustration of the exemplary embodiment as shown on the attached drawings, and they do not limit in any way the working position of the gas spring according to this invention at its use.

The working gas can be the air; therefore, in one embodiment, the gas spring can be an air spring. In the embodiment shown, the spring is a compression spring, where the working gas is under a pressure that is higher than the atmospheric pressure. As already mentioned above, the spring according to this invention might also be arranged as an extension spring, where the working gas is under a pressure that is lower than the atmospheric pressure.

In order to control the transferring of the working gas through the opening 30, a controlling rod 51 is provided, which protrudes through the upper cover of the storage cylinder 21, in which it is sealed by means of a silicon tube 55, and ends in the area of the transfer opening 30 in the piston 2, whereas on this controlling rod 51 there are provided a regulation cone 42 and a ring 60, which can be constituted for example as a Seeger circlip ring. On the upper end, above the cover of the storage cylinder, the controlling rod 51 is provided with an externally accessible adjusting element 50 for adjusting dampening of the return of the piston and/or for adjusting dampening of the springing, for example manually.

The regulation cone 42 (similarly to the so-called valve plug) can be moved in the axial direction relatively with respect to the controlling rod 51 and at the same time relatively with respect to the transfer opening 30 downwards to the contact with the transfer opening, and upwards against the effect of the flexible silicon tube 55 to the so-called upper back stop 52 constituted by the shoulder on the controlling rod 51.

The ring 60 (for example the Seeger circlip ring) is arranged on the controlling rod 51, under the cone 42, and in this embodiment it can be moved, together with the controlling rod 51 on which it is stationary fixed, relatively to the transfer opening 30 between the upper position, in which it closes the transfer opening 30, and a second position, in which the transfer opening 30 is opened to the maximum and therefore the dampening of the gas spring is minimal.

When the air spring - damper is compressed, the pressure in the working cylinder increases, thereby pushing away the regulation cone 42 (throttling regulation valve plug), allowing for transferring of the medium into the storage cylinder 20. The medium struggles through the transfer opening or openings 30 to the transfer reservoir 20. At releasing at the extension, the regulation cone 42 prevents from a fast return of the medium and therefore prevents also a fast returning of the air spring (it performs the function of an air damper). The returning of the spring (dampening) can be controlled externally by means of the external adjusting element 50 of the regulation of the springing and dampening, by means of the controlling rod 51 (for example a regulation screw) and by means of the upper back stop 52, and this according to the requested level of dampening. A silicon tube 55 is arranged in the storage cylinder 21 around the spacer screw, this silicon tube 55 having sealing and spring function, i.e. it seals the reservoir 20 and pushes the regulation cone 42 to the transfer opening 30. The cone 42 fits to the conical depression in the bottom of the storage cylinder 21 constituting the piston 2, closes the transfer opening and at the same time ensures the centering of the controlling rod, on which it is slidably arranged. Cone 42 with the controlling rod 51 has the function of the external control of the springing and damping characteristics. In case of the maximum tightening of the controlling rod, the shoulder of the rod enables total closing of the transfer opening, so that if needed an exponential increase of the pressure in the working cylinder occurs with no dampening function. In case of untightening of the spacer screw, the pressure does not increase exponentially and a dampening function occurs. However, thanks to the small flow through of the medium, the springing is very hard. In an intermediate position, the space between the shoulder of the rod (upper back stop) and the Seeger circlip ring (lower back stop) enables a free movement of the regulation cone. The flexible silicon tube 55 forces the regulation cone, so that it works as one way valve. At the compression of the spring it allows a free transfer of the medium from the space of the working cylinder 10 to the space of the storage cylinder 21, but at the returning of the spring to its original state the cone 42 closes the transfer opening 30 and prevents the transfer of the medium from the storage cylinder 21 back into the working cylinder 10. Theoretically, the spring remains compressed. With even further untightening of the screw of the controlling rod 51, the ring 60 (Seeger circlip ring) raises the cone 42, so that it enables the re-entry of the medium into the working cylinder 10. Proportionally to the distance of the cone 42 from the conical depression, the medium "struggles" more or less through the opening 30, and the spring is more or less damped on its returning.

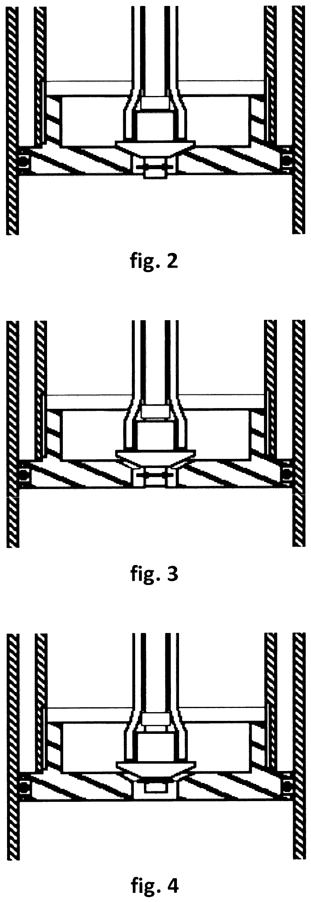

Such a gas spring enables three basic regimes of functioning: not only springing with dampening of the return of the piston (fig. 3) (so-called soft springing), but also a hard springing (fig. 2), and finally also springing without dampening (fig. 4).

In fig. 2, so-called hard springing is shown, i.e. springing, when the gas at the compression is not transferred from the working cylinder 10 into the reservoir 20, because the cone 42 is, by means of the upper back stop 52 of the controlling rod 51 (based on the setting of the adjusting element 50), pushed into the transfer opening 30, and this transfer opening 30 is therefore blocked. The spring therefore springs solely based on the compressibility of the working gas in the working cylinder 10.

At the springing, or soft springing (as it is not the hard springing that has just been described) with dampening of the return of the piston (for which the gas spring according to this invention is primarily intended), as illustrated in fig. 3, a transfer of the working gas from the working cylinder 10 into the reservoir 20 occurs. The cone 42 can be axially moved between the upper back stop 52 and the lower back stop, in this exemplary embodiment constituted by the ring 60 (for example so called Seeger circlip ring). When compressing the spring, the flow of the working gas passing through the transfer opening 30 overcomes the force of the flexible tube 55, for example a silicon tube 55, pushing the cone 42 away from the upper back stop, and pushes this cone 42 up to the upper back stop. In this position, the transfer opening is opened to the most, whereby this opening is given by the position of the upper back stop. At the returning of the spring, the flexible tube 55 pushes the cone 42 down to the ring 60 (i.e. to the lower back stop). Based on the setting of this lower back stop, the minimum level of the transferring through the transfer opening 30 is set - and thereby also the level of the dampening of the return of the spring is set.

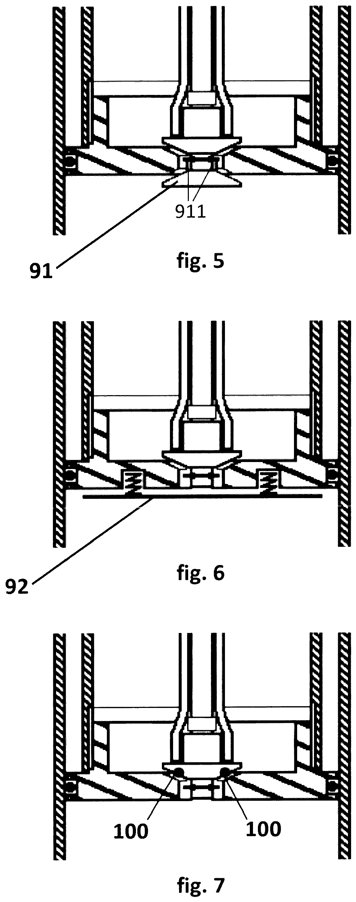

Between the cone 42 and the transfer opening 30 a spacer 100 can be arranged for preventing a total closure of the transfer opening 30 at the normal functioning of the spring based on the influence of the transferred working gas or of the silicon tube 55, see fig. 7. Preferably, however, this spacer 100 is deformable (it can be for example a silicon separator) and it allows a total closing of the transfer opening 30 if needed (for example by means of tightening the controlling means, for example the controlling rod 51, into extreme position, if not hindered by the position of the ring 60) in order to get an extra hard springing, as shown in fig. 2.

In fig. 4, the lower back stop is set by means of the ring 60 so that the working gas can pass through the transfer opening 30 at the compression of the spring as well as at the return of the piston. Hence, a springing without dampening occurs (or almost without dampening, in case of a very intense vehement compression of the spring, the cone 42 can be pushed even further).

As shown in fig. 5, in a preferred embodiment the whole device can be completed with a throttle dashpot 91 in the form of a cone with suspension 911 (constituted for example by a silicon tube). This throttle dashpot 91 closes in case of a sharp increase in pressure (for example when used in a car in case of running over an unexpected hump). This throttle dashpot 91 causes the pressure in the spring to increase exponentially, it inactivates the dampening, so that after passing over the hump the wheel returns back without slowdown, and the car does not fall down.

In yet another embodiment, a steel plate 92, for example steel plate 92 suspended by the helical springs, or any other suitable element, may constitute the throttle dashpot (see fig. 6). Between the sealing of the upper cover of the working cylinder 10 with the storage cylinder 21 and the sealing of the piston 2, there is a space 70, wherein the pressure in this space 70 increases at the return of the piston 2, providing a kind of a gas silent-block, preventing a sharp impact of the piston 2 onto the upper cover in the case of no dampening at all due to closing of the transfer opening 30 by the cone 42 or by means of the throttle dashpot 91, 92, or possibly by means of tightening the controlling rod 51. Thanks to the storage (transfer) cylinder 21, the pressure increase bellow the piston is not as dramatic as, for example, in case of a common air spring. In this embodiment, the storage cylinder 21 takes up approximately 40 % of the total volume of the cavity of the spring (of the medium). The extension of the spring in that case is approximately 40 %.

In an alternative embodiment, the silicon tube can be replaced by a helical spring. In such a case however, the cone with the controlling rod, as well as the controlling rod with the cover of the storage cylinder, must be sealed by other means (for example by means of an o-ring seal or by a gasket). With this embodiment, high friction and uneasy moving are a disadvantage, above all in case of the cone.

A throttling ring, or a bullet, or other sealing element can also replace the cone.

In yet another alternative embodiment, as shown in fig. 1b, the adjusting element 50 can be constituted by a pinion 50' for adjusting by means of servo mechanism, for example changing servo motor. Adjusting of the dampening and/or springing might than be controlled automatically, especially electronically.

Fig. 1b also illustrates an alternative filling opening 80' that, in contrast to the filling valve 80, does not only serve to a single action filling of the gas spring, but can also be connected to a continuous regulation of the pressure in the spring (for example by means of a compressor). In this way, it is possible to adapt the overall amount of the gas and thereby change the nominal pressure in the gas spring according to this invention on the go.

Both above-mentioned alternative embodiments, allowing for controlling the dampening and/or springing, or allowing for regulating the pressure in the spring, can preferably be used for example for a car suspension variable depending on the running conditions, especially based on the load or roadway surface.

The main advantages of this invention are:
- Gas spring at compression and gas damper at the extension both in a single integrated body.
- Reservoir (transfer cylinder) provides for an advantage of a slow pressure increase at compression (comfort springing).
- Slow extension without sharp bounce-back (comfort dampening).
- External control of the springing characteristics of the gas spring.
- External control of the damping characteristics of the gas damper.
- A facultative throttle dashpot.
- Pneumatic spring according to this invention is constituted by simple, easy-to-produce parts of standard design, it is very simple from the constructional point of view, and its mounting and disassembling is easy. The pneumatic spring according to this invention is also highly reliable thanks to the use of standard constructional parts, providing good results in the field of dampers. The pneumatic spring according to this invention can be produced and used in a very broad spectrum of dimensions, with the diameter of the working cylinder from a very few centimeters to more than one meter. The pneumatic spring according to this invention does not suffer from any fatigue of the material, its damping elements practically do not suffer from any wear, the hardness of the springing can be widely regulated by setting the initial pressure in the working cylinder. The compressibility of the pneumatic damping spring is up to 60 % of the initial length. The weight of the pneumatic spring according to this invention is low; it can be manufactured from light aluminium alloys or plastic materials and with far lower production costs if compared to the known pneumatic springs and helical steel springs.

The gas spring according to this invention can preferably be used especially for providing suspension for shoes (men's, ladies', sport), for springing with dampening for a bike, for passenger cars, for trucks and for railway cars, for providing suspension of the bridge structures and building constructions, as an anti-vibration device for stabilization of machines, as a door closer, and many more...

An embodiment with the opening and/or valve 111 in the upper sealing between the hollow cylinder 21 and a mantle of the working cylinder 10 for allowing filling and discharging, respectively, of the pressurized air into/from the space 70 above the piston between the hollow cylinder 21 constituting the hollow piston rod and the mantle of the working cylinder 10 in order to compress the spring and to return the spring back, respectively, can preferably be used for different air brakes, as so-called air cylinder ("pneumotor") or as a lifting jack for passenger cars and trucks etc.

The air or gas spring according to this invention is self-dampening in both directions, i.e. at compression as well as at the extension. At compression it behaves as an air spring with dampening and at the extension it also behaves as an air spring with dampening, whereas both these damping effects can be, as regards the magnitude of the dampening, controlled independently from each other.

## Claims

1. Compression gas spring having a working cylinder (10) and therein slidably arranged piston (2), whereas the working gas is, in order to provide for springing and dampening, transferable between the working cylinder (10) and a reservoir (20),
the reservoir (20) being made up by a closed hollow cylinder (21) constituting the piston rod, one end of which is closed up by the piston (2),
in the piston (2), there is at least one transfer opening (30), **characterized in that** the transfer opening (30) is provided with at least one gas flow control element which is slidable axially with respect to the transfer opening (30) between an upper back stop (52) and a lower back stop,
whereby a controlling rod (51) goes through the piston rod in order to axially adjust the gas flow control element from outside by means of adjusting the upper back stop (52) and the lower back stop, both being preferably arranged on this controlling rod (51).

2. Gas spring according to claim 1, **characterized in that** the gas flow control element is a regulation cone (42) or a ring or a combination of both.

3. Gas spring according to any of the preceding claims, **characterized in that** the lower back stop is a ring (60), e.g. circlip ring.

4. Gas spring according to any of the preceding claims, **characterized in that** on the controlling rod (51), there are arranged springing means for returning of the gas flow control element, and sealing means for providing sealing of the through going controlling rod (51) with respect to the reservoir (20), whereas the means for returning of the gas flow control element and at the same time the means for sealing of the through going controlling rod are preferably constituted by a single flexible tube (55), e.g. a silicon tube (55).

5. Gas spring according to any of the preceding claims, **characterized in that** at least one throttle dashpot (91, 92) is arranged for closing the transfer opening (30) in case of sharp stroke at least in one direction, whereas this throttle dashpot is preferably constituted by a suspended cone (91) or by a suspended plate (92).

6. Gas spring according to any of the preceding claims, **characterized in that** between the sealing of the piston (2) with respect to the working cylinder (10) and the sealing of the upper cover of the working cylinder (10), through which the hollow cylinder (21) protrudes constituting the piston rod, there is, in the space (70) between the hollow cylinder (21) and the mantle of the working cylinder (10), gas contained, constituting a cushioning in case of approaching of the piston (2) to the upper cover of the working cylinder at the maximum extension of the piston (2).

7. Gas spring according to any of the preceding claims, **characterized in that** a spacer (100) is arranged between the gas flow control element and the transfer opening (30) for preventing total closing of the transfer opening (30) at the normal functioning of the spring, whereas preferably the spacer (100) of the dampening is deformable and allows in this way a total closing of the transfer opening (30) if needed.

8. Gas spring according to any of the preceding claims, **characterized in that** in the release state of the spring, the reservoir (20) takes up approximately 30 to 50 % of the total volume of the working gas, preferably approximately 40 %.

9. Gas spring according to any of the preceding claims, **characterized in that** the working gas is air.

10. Gas spring according to any of the preceding claims, **characterized in that** an opening and/or valve (111) is arranged in the upper sealing between the hollow cylinder (21) and a mantle of the working cylinder (10) for allowing filling and discharging, respectively, of the pressurized air into/from the space (70) above the piston between the hollow cylinder (21) constituting the hollow piston rod and the mantle of the working cylinder (10) in order to compress the spring and to return the spring, respectively.

## Patentansprüche

1. Druckgasfeder umfassend einen Arbeitszylinder (10) und einen darin verschiebbar angeordneten Kolben (2), wobei das Arbeitsgas zum Zweck der Federung und Dämpfung zwischen dem Arbeitszylinder (10) und der Vorratskammer (20) transferierbar ist,
wobei die Vorratskammer (20) durch einen die Kolbenstange bildenden verschlossenen hohlen Zylinder (21) gebildet ist, dessen ein Ende mit dem Kolben (2) geschlossen ist,
wobei es im Kolben (2) mindestens eine Überlauföffnung (30) gibt, **dadurch gekennzeichnet, dass** die Überlauföffnung (30) mit mindestens einem Element zur Regulierung des Gasdurchflusses versehen ist, das bezogen auf die Überlauföffnung (30) zwischen dem oberen Anschlag (52) und dem unteren Anschlag axial verschiebbar ist,
wobei durch die Kolbenstange eine Regulationsstange (51) für die axiale Einstellung des Elements zur Regulierung des Gasdurchflusses von außen mittels Einstellung des oberen Anschlags (52) und des unteren Anschlags durchgeht, die beide vorteilhaft an dieser Regulationsstange (51) angeordnet sind.

2. Gasfeder gemäß dem Anspruch 1, **dadurch gekennzeichnet, dass** das Element zur Regulierung des Gasdurchflusses ein Regulationskegel (42) oder ein Ring oder die Kombination der beiden ist.

3. Gasfeder gemäß einem beliebigen der vorausgehenden Ansprüche, **dadurch gekennzeichnet, dass** der untere Anschlag ein Ring (60), z. B. ein Sicherungsring ist.

4. Gasfeder gemäß einem beliebigen der vorausgehenden Ansprüche, **dadurch gekennzeichnet, dass** an der Regulationsstange (51) ein federndes Mittel zur Rückführung des Elements zur Regulierung des Gasdurchflusses und ein Mittel zur Abdichtung der durchgehenden Regulationsstange (51) gegenüber der Vorratskammer (20) angeordnet ist, wobei das Mittel zur Rückführung des Elements zur Regulierung des Gasdurchflusses und gleichzeitig das Mittel zur Abdichtung der durchgehenden Regulationsstange vorteilhaft durch ein einziges flexibles Röhrchen (55), z. B. durch ein Silikonröhrchen (55), gebildet sind.

5. Gasfeder gemäß einem beliebigen der vorausgehenden Ansprüche, **dadurch gekennzeichnet, dass** mindestens eine Schockklappe (91, 92) zum Verschließen der Überlauföffnung (30) im Falle eines heftigen Schlags mindestens in einer Richtung angeordnet ist, wobei diese Schockklappe vorteilhaft durch einen federgelagerten Kegel (91) oder eine federgelagerte Planchette (92) gebildet ist.

6. Gasfeder gemäß einem beliebigen der vorausgehenden Ansprüche, **dadurch gekennzeichnet, dass** zwischen der Abdichtung des Kolbens (2) gegenüber dem Arbeitszylinder (10) und der Abdichtung des oberen Deckels des Arbeitszylinders (10), durch den der die Kolbenstange bildende hohle Zylinder (21) durchgeht, im Raum (70) zwischen dem hohlen Zylinder (21) und dem Mantel des Arbeitszylinders (10) das Gas geschlossen ist, dass einen Kissen im Falle der Näherung des Kolbens (2) zum oberen Deckel des Arbeitszylinders bei maximalem Hochziehen des Kolbens (2) bildet.

7. Gasfeder gemäß einem beliebigen der vorausgehenden Ansprüche, **dadurch gekennzeichnet, dass** zwischen dem Element zur Regulierung des Gasdurchflusses und der Überlauföffnung (30) eine Distanzeinlage (100) zum Verhindern des vollständigen Schließens der Überlauföffnung (30) beim gewöhnlichen Betrieb der Feder angeordnet ist, wobei die Distanzeinlage (100) der Dämpfung vorteilhaft deformierbar ist und so das vollständige Schließen der Überlauföffnung (30) im Bedarfsfalle ermöglicht.

8. Gasfeder gemäß einem beliebigen der vorausgehenden Ansprüche, **dadurch gekennzeichnet, dass** in Ruhelage der Feder die Vorratskammer (20) ungefähr 30 bis 50 % des Gesamtvolumens des Arbeitsgases, vorteilhaft ungefähr 40 % darstellt.

9. Gasfeder gemäß einem beliebigen der vorausgehenden Ansprüche, **dadurch gekennzeichnet, dass** das Arbeitsgas die Luft ist.

10. Gasfeder gemäß einem beliebigen der vorausgehenden Ansprüche, **dadurch gekennzeichnet, dass** eine Öffnung und/oder ein Ventil (111) in der oberen Dichtung zwischen dem hohlen Zylinder (21) und dem Mantel des Arbeitszylinders (10) zur Ermöglichung des Einlassens bzw. Auslassens der Druckluft in den/aus dem Raum (70) über dem Kolben zwischen dem die hohle Kolbenstange bildenden hohlen Zylinder (21) und dem Mantel des Arbeitszylinders (10) zum Zweck der Verdrückung der Feder bzw. der Rückführung der Feder angeordnet ist.

## Revendications

1. Ressort à gaz de poussée comprenant un cylindre de travail (10) logeant un piston (2) agencé de façon coulissant, le gaz de travail, afin de permettre faire ressort et amortir, étant transférable entre ledit cylindre de travail (10) et le réservoir (20),
ledit réservoir (20) étant formé d'un cylindre creux fermé (21) qui représente une tige de piston, et dont une extrémité est obturée par ledit piston (2),
ledit piston (2) comprenant au moins un orifice de transfert (30) **caractérisé en ce que** ledit orifice de transfert (30) est pourvu d'au moins un élément de réglage de débit de gaz apte à être déplacé axialement par rapport à ledit orifice de transfert (30) entre une butée supérieure (52) et une butée inférieure,
ladite tige de piston étant traversée par une tige de contrôle (51) pour un ajustement axial de l'élément de réglage de débit de gaz depuis l'extérieur en ajustant la butée supérieure (52) et la butée inférieure, les deux avantageusement agencées sur cette tige de contrôle (51).

2. Ressort à gaz selon la revendication 1 **caractérisé en ce que** ledit élément de réglage de débit de gaz est un cône de réglage (42) ou un anneau ou la combinaison des deux.

3. Ressort à gaz selon l'une quelconque des revendications précédentes **caractérisé en ce que** la butée inférieure est un anneau (60), par exemple l'anneau de sûreté.

4. Ressort à gaz selon l'une quelconque des revendications précédentes **caractérisé en ce que** sur la tige de contrôle (51), un moyen de ressort pour ramener l'élément de réglage de débit de gaz et un moyen d'étanchéité pour étancher la tige de contrôle traversante (51) à l'égard du réservoir (20) sont agencés, le moyen pour ramener l'élément de réglage de débit de gaz et le moyen d'étanchéité de la tige de contrôle traversante étant avantageusement formés d'un seul tube souple (55), p. ex. d'un tube de silicone (55).

5. Ressort à gaz selon l'une quelconque des revendications précédentes **caractérisé en ce que** au moins un clapet d'étranglement (91, 92) est agencé pour fermer l'orifice de transfert (30) en cas d'un choc violent au moins dans une direction, ledit clapet d'étranglement étant avantageusement formé d'un cône de suspension (91) ou d'une lame de suspension (92).

6. Ressort à gaz selon l'une quelconque des revendications précédentes **caractérisé en ce qu'**entre joint d'étanchéité du piston (2) à l'égard du cylindre de travail (10) et joint d'étanchéité du couvercle supérieur de cylindre de travail (10), traversé par le cylindre creux (21) formant la tige de piston, dans l'espace (70) entre le cylindre creux (21) et l'enveloppe du cylindre de travail (10), est enfermé le gaz formant un amortisseur en cas de l'approchement du piston au couvercle supérieur du cylindre de travail lors du levage maximal du piston (2).

7. Ressort à gaz selon l'une quelconque des revendications précédentes **caractérisé en ce qu'**entre l'élément de réglage de débit de gaz et l'orifice de transfert (30), une entretoise (100) est agencée pour empêcher la fermeture totale de l'orifice de transfert (30) en fonctionnement normal du ressort, l'entretoise (100) d'amortissement étant avantageusement déformable et ainsi permettant la fermeture totale de l'orifice de transfert (30) en cas de besoin.

8. Ressort à gaz selon l'une quelconque des revendications précédentes **caractérisé en ce qu'**à l'état de repos de ressort, le réservoir (20) présente d'environ 30 à 50% du volume total de gaz de travail, avantageusement environ 40%.

9. Ressort à gaz selon l'une quelconque des revendications précédentes **caractérisé en ce que** le gaz de travail est de l'air.

10. Ressort à gaz selon l'une quelconque des revendications précédentes **caractérisé en ce que** l'orifice et/ou valve (111) sont agencés dans le joint supérieur entre le cylindre creux (21) et l'enveloppe de cylindre de travail (10) pour permettre le remplissage respectivement la vidange de l'air de compression dans/de l'espace au-dessus de piston entre le cylindre creux (21), représentant une tige de piston creuse, et l'enveloppe de cylindre de travail (10) afin de comprimer le ressort respectivement de ramener le ressort à la position initiale.
